# EUROPEAN PATENT APPLICATION

(11) **EP 4 818 939 A1**
(43) Date of publication of application: **07.10.2026**
(21) Application number: 25305471.2
(22) Date of filing: 31.03.2025
(51) Int. Cl.: G06F 21/33, H04L 9/32, H04L 9/00

(54) **METHOD FOR GENERATING A VERIFIABLE CREDENTIAL TEMPLATE**

(71) Applicant: BULL SAS, 78340 Les Clayes-Sous-Bois (FR)
(72) Inventor: PALOMARES PEREZ, Angel, 28028 Madrid (ES); CRESPO, Alberto, 28522 Rivas-Vaciamadrid (ES)
(74) Representative: IPAZ

(57) **Abstract**

The invention relates to a method (20) for generating a verifiable credential template, the method including the steps:
- based on a received issuer decentralized identifier of a selected issuer, retrieving (24) a cryptographic material identifier associated with the selected issuer;
- retrieving (28) status verification mechanism metadata defining a selected status method for verifying a status of each verifiable credential to be issued;
- retrieving (30), based on a selected data schema, schema metadata defining a data structure with which data comprised in the verifiable credential to be issued should conform;
- storing (38), as the verifiable credential template, a template including:
• the retrieved cryptographic material identifier;
• the retrieved status verification mechanism metadata; and
• the retrieved schema metadata.

## Description

### Field of the invention

The present invention relates to a method for generating a verifiable credential template to be used for issuing at least one verifiable credential.

The invention further relates to a method for issuing a verifiable credential, a computer program and a computing device.

The invention applies to the field of self-sovereign identity, and more precisely to the field of verifiable credentials.

### Background

Self-Sovereign Identity (SSI) is the biggest paradigm shift in the identity management landscape in the last decades, from the more established centralized and federated approaches that have been shaping identity management towards methods that:
- are easy-to-use, user-centric, with effective ownership and control of identity-related attestations;
- are fundamentally secure (facilitating strong multi-factor and passwordless authentication) featuring secure communication protocols;
- are supported on reliable, decentralized trust models and infrastructures, with instantaneous cryptographic verification of exchanged credentials for paperless and highly streamlined electronic procedures in public and private sectors; and
- allow portable and interoperable identity, based on internationally accepted standards suitable for cross-border and cross-sector electronic transactions.

SSI is built upon a number of essential technological pillars from web-of-trust model and modern Web3 standards like decentralized identifiers (DID) and verifiable credentials (VC), that allow rigorous and unequivocal validation of each identity.

However, the issuance of verifiable credentials is not entirely satisfactory.

Indeed, some of the major challenges related to the issuance of such VCs include:
- a general lack of technical expertise relating to VC generation and integration within existing business chains;
- inefficiency, due to repeated development efforts resulting in ad-hoc developed codes for every type of credential to be issued;
- a large variability in requirements (semantic, syntactic) for VCs depending on domain;
- GDPR requirements for data minimization (selective disclosure, advanced cryptography for zero-knowledge proofs, etc.).

A purpose of the present invention is to overcome at least one of these drawbacks.

Another purpose of the invention is to provide a method that allows to streamline the issuance of verifiable credentials despite evolving standards associated to SSI.

### Summary of the invention

To this end, the present invention is a method of the aforementioned type, the method being computer-implemented and including the steps:
- based on a received issuer decentralized identifier of a selected issuer, retrieving a cryptographic material identifier associated with the selected issuer;
- retrieving status verification mechanism metadata defining a selected status method for verifying a status of each verifiable credential to be issued;
- retrieving, based on a selected data schema, schema metadata defining a data structure with which data comprised in the verifiable credential to be issued should conform;
- storing, in a memory, a template including:
   - the retrieved cryptographic material identifier;
   - the retrieved status verification mechanism metadata; and
   - the retrieved schema metadata,
the stored template forming the generated verifiable credential template.

Indeed, thanks to this method, starting from inputs of a user, selected based on business, organizational or sectorial requirements (such as an issuer decentralized identifier of a selected issuer, or a selected data schema), a fully parameterized verifiable credential template is generated.

Such verifiable credential template greatly improves the issuance of verifiable credentials, as:
- there is no further requirement for technical expertise relating to generation and integration of verifiable credentials;
- the need to develop ad-hoc code for every type of credential to be issued is removed, thereby improving efficiency;
- the data included in the verifiable credential template automatically solve the problem that may arise from the variability in requirements for verifiable credentials.

According to other advantageous aspects of the invention, the method includes one or several of the following features, taken alone or in any technically possible combination:

the method further comprises receiving format metadata defining a format for the verifiable credential to be issued, the verifiable credential template further including the received format metadata;

the method further comprises a step of verifying that the retrieved cryptographic material and the received format metadata are compatible with each other;

the method further comprises receiving validity data representative of a validity period of the verifiable credential to be issued, the verifiable credential template further including the received validity data;

the method further comprises receiving at least one additional attribute, the verifiable credential template further including, for each received additional attribute, said additional attribute, if said additional attribute is compliant with the data structure defined by the retrieved schema metadata;

at least one additional attribute is associated with corresponding disclosure data indicating whether a value of said additional attribute in the verifiable credential to be issued should be presented with said verifiable credential.

The invention further relates to a computer-implemented method for issuing a verifiable credential by an issuer, based on a verifiable credential template generated using the method as defined above, the issued verifiable credential including at least:
- cryptographic material obtained using the cryptographic material identifier included in the verifiable credential template; and
- the status verification mechanism metadata stored in the template, to allow a verifier to verify the status of the verifiable credential with the issuer,
further data included in the issued credential conforming with the schema metadata stored in the verifiable credential template.

According to another aspect of the same invention, it is proposed a computer program comprising instructions, which when executed by a computer, cause the computer to carry out the steps of the method according to the invention.

The computer program may be in any programming language such as C, C++, JAVA, Python, etc. Alternatively, the computer program may be in machine language.

The computer program may be stored in a non-transient memory, such as a USB stick, a flash memory, a hard-disc, a processor, a programmable electronic chip, etc.

The computer program may be stored in a computerized device such as a computer, a smartphone, a tablet, a server, etc.

The invention also relates to a computing device for generating a verifiable credential template to be used for issuing at least one verifiable credential, the computing device comprising a processing unit and a memory, the processing unit being configured to:
- based on a received issuer decentralized identifier of a selected issuer, retrieve cryptographic material associated with the selected issuer;
- retrieve status verification mechanism metadata defining a selected status method for verifying a status of each verifiable credential to be issued;
- retrieve, based on a selected data schema, schema metadata defining a data structure with which data comprised in the verifiable credential to be issued should conform;
the memory being configured to store a template including:
- the retrieved cryptographic material;
- the retrieved status verification mechanism metadata; and
- the retrieved schema metadata,
the stored template forming the generated verifiable credential template.

The device may be a personal device such as a computer, a smartphone, a tablet, a smartwatch, any wearable electronic device, etc.

The device according to the invention may execute one or several applications to carry out the method according to the invention.

The device according to the invention may be loaded with, and configured to execute, the computer program according to the invention.

### Brief description of the drawings

Other advantages and characteristics will become apparent on examination of the detailed description of an embodiment which is in no way limitative, and the attached figures, where:
figure 1 is schematic representation of a computing device according to the invention; and
figure 2 is flowchart of a verifiable credential template generation method implemented by the computing device of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

### Detailed description

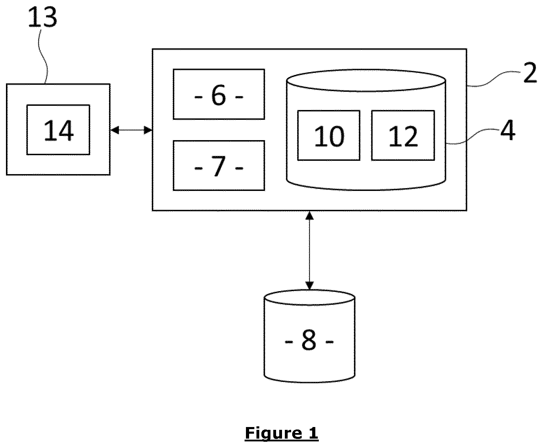

A computing device 2 according to the invention is shown on figure 1.

The computing device 2 comprises a memory 4 and a processor 6 connected to each other.

The computing device 2 may further include a human-computer interface 7 (further simply referred to as "interface") to allow, for instance, the entry of data by a user.

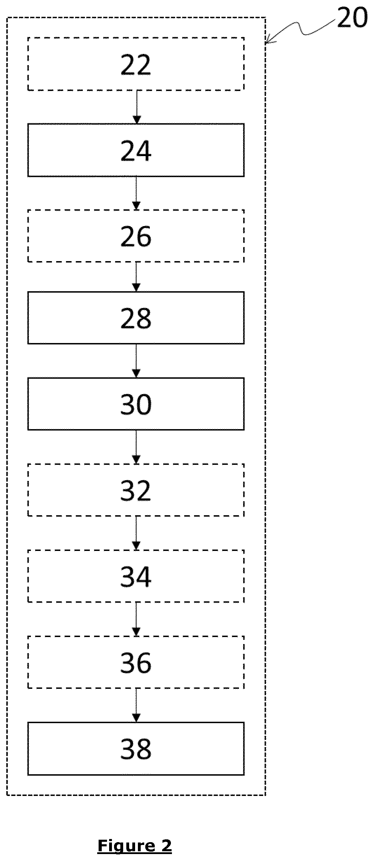

The computing device 2 is further connected to at least one node 8, through any type of suitable connection, in order to retrieve data relevant for performing a verifiable credential template generation method 20 (figure 2), hereinafter referred to as "generation method".

The memory 4 is configured to store at least one verifiable credential template 10 (further referred to as "template"), designed for the issuance of at least one verifiable credential 14 (further referred to as "credential").

The memory 4 is further configured to store a computer program 12 comprising instructions which, when executed by the processor 6, cause the computing device 2 to carry out the steps of the generation method 20.

### Generation of a verifiable credential template

As mentioned above, the computing device 2 is configured to perform the aforementioned generation method 20.

As shown on figure 2, the generation method 20 includes a cryptographic material retrieval step 24, a status retrieval step 28, a schema retrieval step 30, and a storing step 38.

Preferably, the generation method 20 also comprises at least one of: a naming step 22, a validity setting step 26, a format setting step 32, a verification step 34 and an enhancement step 36.

It should be noted that steps 20 to 36 may be performed in any order with respect to one another.

### Naming step 22

Preferably, the computing device 2 is configured to receive, during the naming step 22, data indicative of a name and/or a description of a template 10 to be generated. Such data may be input by a user through the interface 7.

In this case, the computing device 2 may be configured to determine whether the received name is valid.

For instance, the received name may be considered as invalid if it is not unique (for instance, identical to the name of a pre-existing template), and/or if it contains characters (such as special characters) or strings of characters previously defined as not allowed.

Alternatively, or in addition, the computing device 2 may be configured to determine whether the received description is valid.

For instance, the received description may be considered as invalid if it contains characters (such as special characters) or strings of characters previously defined as not allowed.

### Cryptographic material retrieval step 24

Furthermore, the computing device 2 is configured to receive, during the cryptographic material retrieval step 24, an issuer decentralized identifier (or "issuer DID") of a selected issuer 13. The issuer ID may be input by the user through the interface 7.

Such issuer 13 is defined as the entity that is intended to issue credentials 14 based on the current template 10.

Moreover, the computing device 2 is configured to retrieve, based on the received issuer DID, a cryptographic material identifier relating to cryptographic material associated with said selected issuer 13.

Said cryptographic material identifier may later be used, during the issuance of a verifiable credential 14 based on said template 10, to retrieve the cryptographic material associated with the selected issuer 13 corresponding to said template 10.

For instance, such cryptographic material may include a pair of public and private keys, following a PKI (Public Key Infrastructure) approach.

More precisely, in this case, the issuer 13 may be configured to retrieve said cryptographic material from at least one node 8, such as nodes of a decentralized ledger, based on the aforementioned cryptographic material identifier.

Preferably, if the issuer DID corresponds to an issuer that has not been previously involved in the generation of a template 10, the computing device 2 is configured to add an entry relative to the issuer 13 in the memory 4. Such addition (also referred to as "enrollment") may include verifications based on a predefined trusted model, to ensure that the enrolled issuer 13 can be considered as a trusted issuer, especially for the retrieval of cryptographic material based on the cryptographic material identifier.

### Validity setting step 26

Preferably, the computing device 2 is also configured to receive, during the validity setting step 26, validity data representative of a validity period of the credential 14 to be issued. The validity data may be input by the user through the interface 7.

For instance, such validity period is defined by the user currently requesting the generation of the template.

For instance, the validity data may include a validity starting date and/or a validity expiration date.

As will be disclosed below, such validity data may be stored in the template 10, during storing step 38.

### Status verification mechanism retrieval step 28

Furthermore, the computing device 2 is configured to retrieve, during the status verification mechanism retrieval step 28, status verification mechanism metadata relating to a mechanism for verifying the status of a credential 14 issued based on the template 10.

Such status verification mechanism metadata may be retrieved based on the aforementioned issuer ID.

The status verification mechanism metadata include information that a verifier may use to retrieve, from the issuer 13 of a given credential 14 issued based on the template 10, a status of said credential. For instance, the status verification mechanism metadata may include a type of standard that the verification mechanism (and/or the corresponding revocation procedure) relies on, an URL and an index.

More precisely, the computing device 2 is configured to retrieve the type of status metadata from the issuer 13 based on the aforementioned issuer ID.

Preferably, if the status method has not been previously involved in the generation of a template 10, the computing device 2 is configured to add an entry relative to said status method in the memory 4.

### Schema retrieval step 30

Furthermore, the computing device 2 is configured to retrieve schema metadata, during the status retrieval step 28.

Such schema metadata define a data structure with which data comprised in the credential 14 to be issued should conform. Alternatively, or additionally, the schema metadata identify a trusted entity that has previously defined the required attributes for a given credential, and that should be reached to validate that the (to be) issued credential 14 is compliant with said definition.

More precisely, the computing device 2 is configured to retrieve the schema metadata from a predetermined trusted entity.

### Formatting step 32

Preferably, the computing device 2 is also configured to receive, during the formatting step 32, format metadata defining a format for the credential 14 to be issued.

For instance, such format is defined by the aforementioned user requesting the generation of the current template.

Such format may include one of: SD-JWT (*"Selective Disclosure for JWTs*"), SD_JWT_VC (*"SD-JWT-based Verifiable Credentials"*)*,* JSON-LD (*"JavaScript Object Notation for Linked Data"*)*,* and JWT (*"JavaScript Object Notation Web Token"*)*.*

As will be disclosed below, such format metadata may be stored in the template 10.

### Verification step 34

Preferably, the computing device 2 is also configured to verify, during the verification step 34, that the retrieved cryptographic material identifier and the received format metadata are compatible with each other.

### Enhancement step 36

Preferably, the computing device 2 is also configured to receive, during the enhancement step 36, at least one additional attribute.

Such additional attribute (also referred to as "claim" in the context of verifiable credentials) is, for instance, specified by the user requesting the generation of the current template 10, through the interface 7.

For instance, at least one additional attribute is associated with corresponding disclosure data indicating whether a value of said additional attribute in the credential 14 (to be issued based on the template 10 that is currently being generated) should be presented with said credential 14.

The computing device 2 is further configured to verify that said additional attribute is compliant with the data structure defined by the retrieved schema metadata. If so, such received additional attribute may be stored in the template 10.

### Storing step 38

Furthermore, the computing device 2 is configured to store, in the memory 4, during the storing step 38, the template 10.

More precisely, the stored template 10 is a file including at least:
- the retrieved cryptographic material identifier;
- the retrieved status verification mechanism metadata; and
- the retrieved schema metadata.

Preferably, the template 10 is stored under the name received during the naming step 22.

Preferably, the template 10 further includes one or several data among:
- the description received during said naming step 22;
- the validity data received during the validity setting step 26;
- the format metadata received during the formatting step 32; and
- the at least one additional attribute received during the enhancement step 36.

### Issuance of a verifiable credential

Issuance of a credential 14 by an issuer 13, based on a template 10 generated using the generation method 20 and retrieved from the memory 4, will now be described.

More precisely, as the outcome of such issuance, the obtained credential 14 includes cryptographic material obtained using the cryptographic material identifier.

Moreover, the credential 14 includes the status verification mechanism metadata stored in the template 10, to allow a verifier to verify the status of the credential 14 with the issuer 13.

Furthermore, the data included in the credential 14 conform with the schema metadata stored in the template 10.

Preferably, the credential 14 also includes the validity data as specified in the template 10, to allow a verifier to verify the validity of the credential 14 with the issuer 13.

Such credential 14 may also present a format complying with the format metadata stored in the template 10.

Preferably, the credential 14 also includes values for the additional attributes included in the template 10. For instance, at least one additional attribute in the credential 14 is associated with corresponding disclosure data indicating whether a value of said additional attribute in the issued credential 14 should be presented with said credential 14.

Of course, the invention is not limited to the examples detailed above.

## Claims

1. A computer-implemented method (20) for generating a verifiable credential template (10) to be used for issuing at least one verifiable credential (14), the method including the steps:
- based on a received issuer decentralized identifier of a selected issuer, retrieving (24) a cryptographic material identifier associated with the selected issuer;
- retrieving (28) status verification mechanism metadata defining a selected status method for verifying a status of each verifiable credential to be issued;
- retrieving (30), based on a selected data schema, schema metadata defining a data structure with which data comprised in the verifiable credential (14) to be issued should conform;
- storing (38), in a memory (4), a template including:
• the retrieved cryptographic material identifier;
• the retrieved status verification mechanism metadata; and
• the retrieved schema metadata,
the stored template forming the generated verifiable credential template (10).

2. The method according to claim 1, further comprising receiving (32) format metadata defining a format for the verifiable credential to be issued, the verifiable credential template (14) further including the received format metadata.

3. The method according to claim 2, further comprising a step of verifying (34) that the retrieved cryptographic material and the received format metadata are compatible with each other.

4. The method according to any one of claims 1 to 3, further comprising receiving (26) validity data representative of a validity period of the verifiable credential to be issued, the verifiable credential template (10) further including the received validity data.

5. The method according to any one of claims 1 to 4, further comprising receiving (36) at least one additional attribute, the verifiable credential template (10) further including, for each received additional attribute, said additional attribute, if said additional attribute is compliant with the data structure defined by the retrieved schema metadata.

6. The method according to claim 5, wherein at least one additional attribute is associated with corresponding disclosure data indicating whether a value of said additional attribute in the verifiable credential to be issued should be presented with said verifiable credential.

7. A computer-implemented method for issuing a verifiable credential (14) by an issuer (13), based on a verifiable credential template (10) generated using the method according to any one of claims 1 to 6, the issued verifiable credential including at least:
- cryptographic material obtained using the cryptographic material identifier included in the verifiable credential template; and
- the status verification mechanism metadata stored in the template, to allow a verifier to verify the status of the verifiable credential (14) with the issuer,
further data included in the issued credential conforming with the schema metadata stored in the verifiable credential template.

8. A computer program comprising instructions, which when executed by a computer, cause the computer to carry out the steps of the method of any one of claims 1 to 7.

9. A computing device (2) for generating a verifiable credential template to be used for issuing at least one verifiable credential, the computing device comprising a processing unit (6) and a memory (4),
the processing unit (6) being configured to:
- based on a received issuer decentralized identifier of a selected issuer, retrieve cryptographic material associated with the selected issuer;
- retrieve status verification mechanism metadata defining a selected status method for verifying a status of each verifiable credential to be issued;
- retrieve, based on a selected data schema, schema metadata defining a data structure with which data comprised in the verifiable credential to be issued should conform;
the memory (4) being configured to store a template including:
- the retrieved cryptographic material;
- the retrieved status verification mechanism metadata; and
- the retrieved schema metadata,
the stored template forming the generated verifiable credential template (10).
